# FASCICULE DE BREVET EUROPEEN

(11) **EP 3 902 736 B1**
(45) Date de publication et mention de la délivrance du brevet: **15.11.2023**
(21) Numéro de dépôt: 20710253.4
(22) Date de dépôt: 19.02.2020
(51) Int. Cl.: B62D 25/04, B62D 65/02

(54) **RENFORT DE PIED AVANT OU CENTRAL AVEC DÉTROMPAGE ENTRE VERSIONS DE BASE ET SÉVÉRISÉE, ET PROCÉDÉS ASSOCIÉS**
FRONT- ODER MITTELSÄULENVERSTÄRKUNG MIT SICHERUNG ZWISCHEN GRUND- UND STRINGENTEN VERSIONEN SOWIE ZUGEHÖRIGE VERFAHREN
FRONT OR CENTRAL PILLAR REINFORCEMENT WITH FOOLPROOFING BETWEEN BASIC AND STRINGENT VERSIONS, AND ASSOCIATED METHODS

(30) Priorité: 25.02.2019 FR 1901875
(43) Date de publication de la demande: 03.11.2021
(73) Titulaire: PSA Automobiles SA, 78300 Poissy (FR)
(72) Inventeur: RIVIERRE, Laurent, 75015 PARIS (FR); SAINT DENIS, Lionel, 92290 CHATENAY MALABRY (FR); SENECAL, Josselin, 77176 SAVIGNY LE TEMPLE (FR); DRAPT, Christophe, 90000 BELFORT (FR); ALPY, Eric, 25460 ETUPES (FR)
(86) Numéro de dépôt international: PCT/FR2020/050312
(87) Numéro de publication internationale: WO 2020/174160

(56) Documents cités:
- DE-A1- 10 159 599
- FR-A1- 2 917 698
- FR-A1- 3 040 972
- FR-B1- 2 967 393
- KR-A- 20040 049 028

## Description

### Domaine technique

La présente invention revendique la priorité de la demande française 1901875 déposée le 25 Février 2019.

L'invention a trait au domaine de la gestion de diversité de structures automobiles plus particulièrement à deux variantes de renforts de pied avant ou central de véhicule automobile, un procédé de fabrication des renforts, un procédé de d'indentification des renforts et un procédé d'assemblage des renforts sur carrosserie.

### Technique antérieure

Le document de brevet publié FR 2 967 393 B1 divulgue un renfort de pied de véhicule automobile. Des trous de fixation sont percés dans un fond d'un insert de charnière et dans un fond du renfort de pied, pour permettre le passage de vis de fixation et d'un plot de centrage de la charnière associée. Aussi, il est devenu courant de fabriquer un modèle de véhicule dont les composants présentent des prestations différentes, par exemple en termes de résistance aux chocs latéraux. La diversité des composants nécessite une gestion adaptée du processus logistique et de fabrication.

### Exposé de l'invention

L'invention a pour objectif de pallier au moins un des inconvénients de l'état de la technique susmentionné. Plus particulièrement, l'invention a pour objectif de réduire le risque de défauts lors de la production de véhicules avec plusieurs variantes /exécutions de renforts de pied.

L'invention a pour objet un procédé de fabrication de renfort de pied avant ou central de véhicule automobile, destiné à s'étendre verticalement sur le véhicule automobile et comprenant les étapes suivantes : (a) fournir une tôle emboutie ayant une section transversale en U avec une âme et deux semelles ; (b) réaliser des orifices de fixation de charnière de portière du véhicule sur une zone inférieure et une zone supérieure de la tôle emboutie ; (c) assembler, en face des orifices de fixation à chacune des zones inférieure et supérieure de la tôle emboutie, sur une face intérieure de l'âme de la tôle, une plaque de fixation de la charnière correspondante ; remarquable en ce que l'étape (b) comprend, en outre, réaliser un orifice de détrompage sur au moins une des zones inférieure et supérieure de la tôle emboutie ; et une première et une deuxième exécution du renfort sont réalisées suivant les étapes (a) à (c) où les étapes (a) et (b) sont identiques pour les exécutions et, à l'étape (c), la ou chacune des plaques de fixation en face de l'au moins un orifice de détrompage, respectivement, laisse passant l'orifice dans la première exécution du renfort et obture l'orifice dans la deuxième exécution de renfort.

Selon un mode avantageux de l'invention, à l'étape (c) les plaques de fixation en face du ou de chacun des orifices de détrompage, respectivement, sur les première et deuxième exécutions présentent des formes différentes.

Selon un mode avantageux de l'invention, la ou les plaques de fixation laissant passant l'au moins un orifice de détrompage, respectivement, dans la première exécution du renfort, ne s'étendent que sur l'âme de la tôle emboutie.

Selon un mode avantageux de l'invention, la ou chacune des plaques de fixation laissant passant l'au moins un orifice de détrompage comprend deux filetages femelles et deux orifices sur un axe perpendiculaire et médian à un segment passant par les filetages, de manière à pouvoir être disposée indistinctement suivant deux positions où la plaque est tournée de 180°.

Selon un mode avantageux de l'invention, la ou chacune des plaques de fixation obturant l'au moins un orifice de détrompage, respectivement, dans la deuxième exécution du renfort, est une plaque de renforcement formant une équerre épousant au moins une des semelles de la tôle emboutie.

Selon un mode avantageux de l'invention, les orifices de fixation de la zone supérieure sont au nombre de deux et disposés côte à côte lorsque le renfort est en position verticale sur le véhicule, l'orifice de détrompage sur la zone étant disposé entre et en dessous les deux orifices de fixation.

Selon un mode avantageux de l'invention, les orifices de fixation de la zone inférieure sont au nombre de deux et disposés côte à côte lorsque le renfort est en position verticale sur le véhicule, la zone comprenant, en outre, un orifice d'indexation disposé entre, et en dessous ou au-dessus, des deux orifices de fixation, l'orifice de détrompage de la zone étant disposé entre les deux orifices de fixation et au-dessus ou en dessous des orifices, au droit de l'orifice d'indexation.

L'invention concerne aussi un procédé d'identification de renforts de pied avant ou central de véhicule automobile, remarquable en ce que chacun des renforts est obtenu par le procédé de fabrication selon l'invention ; et le procédé comprend une étape d'identification des renforts sur base d'une détermination du caractère passant ou obstrué du ou d'au moins un des orifices de détrompage.

L'invention concerne aussi un procédé d'assemblage d'une structure de carrosserie de véhicule suivant un modèle donné où le pied avant et/ou le pied central présente une géométrie donnée, comprenant les étapes suivantes : (a) sélection d'un renfort parmi plusieurs renforts ; (b) mise en place du renfort sélectionné sur la structure de carrosserie ; remarquable en ce que les plusieurs renforts sont obtenus par le procédé de fabrication selon l'invention ; et à l'étape (a) un renfort selon la première exécution ou la deuxième exécution est sélectionné en fonction que la structure de carrosserie du véhicule à assembler est suivant une première exécution ou une deuxième exécution, respectivement.

L'invention concerne aussi un renfort de pied avant ou central de véhicule automobile, de section transversale en U avec une âme et deux semelles, destiné à s'étendre verticalement sur le véhicule automobile et comprenant, à chacune d'une zone inférieure et d'une zone supérieure : des orifices de fixation de charnière de portière du véhicule ; une plaque sur une face intérieure de l'âme, avec des filetages femelles en face des orifices, destinés à recevoir des vis de fixation de la charnière correspondante ; remarquable en ce que le renfort comprend, en outre, au niveau des zones inférieure et supérieure : un orifice de détrompage laissé passant ou obturé par la plaque correspondante. Le renfort comporte en outre un orifice d'indexation percé dans la zone inférieure de la tôle emboutie, l'orifice d'indexation étant disposé entre et au-dessus des deux orifices de fixation et l'orifice de détrompage étant disposé entre et en-dessous des deux orifices de fixation.

Les mesures de l'invention sont intéressantes en ce que la solution de détrompage retenue est économique car elle ne nécessite que la réalisation d'orifices supplémentaires. Aussi, la solution retenue est sans conséquence pour la tenue aux chocs latéraux. En outre, elles assurent que le bon renfort de pied central soit mis en place sur le bon véhicule et ainsi garantissent les prestations de sécurité passive. Enfin, elles permettent que plusieurs types différents de véhicules (par ex. 2 types) puissent être assemblés sur la même ligne de production, telle qu'une ligne de ferrage.

D'autres caractéristiques et avantages de la présente invention seront mieux compris à l'aide de la description et du dessin.

### Brève description du dessin

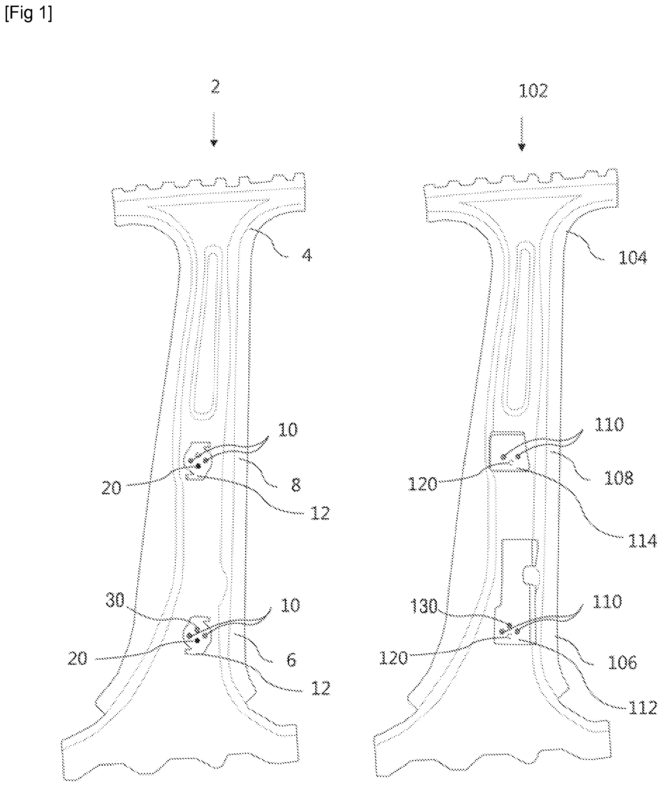

[Fig 1] représente les deux exécutions de renforts de pied central selon l'invention.

### Description détaillée

La figure illustre deux exécutions/variantes d'assemblage de renforts 2, 102 de pied central de véhicule automobile. L'exécution de gauche est dite de base et l'exécution de droite est dite sévérisée. L'exécution de base est destinée pour un véhicule avec un moteur thermique. L'exécution sévérisée est dédiée à la version électrique du véhicule. Dans l'exécution dite sévérisée, le poids des batteries de traction nécessite que la structure du véhicule soit renforcée pour avoir les mêmes prestations en termes de résistance aux chocs (latéraux) que l'exécution de base plus légère.

Les deux exécutions comprennent des éléments en commun comme : une tôle emboutie 4, 104 de section transversale en U avec une âme et deux semelles. La tôle emboutie 4, 104 comprend une zone inférieure 6, 106 et une zone supérieure 8, 108. Des orifices 10, 110 de fixation de charnière de portière du véhicule et des orifices 20, 120 de détrompage sont percés dans la zone inférieure 6, 106 et supérieure 8, 108 de la tôle emboutie 4, 104. En outre, un orifice d'indexation 30, 130 est percé dans la zone inférieure 6, 106 de la tôle emboutie 4, 104 dans la réalisation selon la figure.

La zone inférieure 6, 106 de la tôle emboutie 4, 104 comprend un orifice d'indexation 30, 130, deux orifices de fixation 10, 110 et un orifice de détrompage 20, 120, l'orifice d'indexation 30, 130 étant disposé entre et au-dessus (selon la figure) des deux orifices de fixation 10, 110 et l'orifice de détrompage 20, 120 étant disposé entre et en dessous des deux orifices de fixation 10, 110. La zone supérieure 8, 108 de la tôle emboutie 4, 104 comprend deux orifices de fixation 10, 110 et un orifice de détrompage 20, 120, l'orifice de détrompage 20, 120 étant disposé entre et en dessous des deux orifices de fixation 10, 110.

Les deux exécutions se distinguent l'une à l'autre par le type de plaques 12, 112, 114 de fixation de la charnière montées.

Dans l'exécution dite de base, la plaque 12 de fixation de la charnière peut comprendre dans la zone inférieure 6 et/ou supérieure 8, un orifice de détrompage laissé passant par la plaque 12 en vis-à-vis de l'orifice 20 de détrompage correspondant sur la tôle emboutie 4. La plaque 12 de fixation dans la première exécution du renfort 2, ne s'étend que sur l'âme de la tôle emboutie 4. La plaque 12 peut comprendre deux filetages femelles, et deux orifices sur un axe perpendiculaire et médian à un segment passant par les filetages de manière à pouvoir être disposée indistinctement suivant deux positions où la plaque 12 est tournée de 180°. Aussi, dans l'exemple de la figure, la plaque 12 de fixation pour la zone supérieure 8 est identique à celle de la zone inférieure 6 pour des raisons de standardisation.

Dans l'exécution dite sévérisée, les plaques inférieure et supérieure 112, 114 de fixation de la charnière sont montées respectivement dans la zone inférieure 106 et supérieure 108 de l'embouti 104. Les plaques 112, 114 de fixation obturent respectivement les orifices 120 inférieur et supérieur de détrompage. Dans l'exécution dite sévérisée, les plaques inférieure 112 et supérieure 114 de renforcement forment une équerre épousant au moins une des semelles de la tôle emboutie 104. Aussi, pour répondre aux prestations sévérisées de la version électrique, les plaques de fixation inférieure 112 et supérieure 114 ont été adaptées à leurs zones de fixation respectives et présentent donc des caractéristiques différentes.

Dans le procédé de fabrication (non représenté) selon l'invention, trois étapes sont réalisées :
(a) fournir une tôle emboutie 4, 104 ayant une section transversale en U avec une âme et deux semelles ;
(b) réaliser des orifices 10, 110 de fixation de charnière de portière du véhicule sur une zone inférieure 6, 106 et sur une zone supérieure 8, 108 de la tôle emboutie 4, 104 ;
(c) assembler, en face des orifices 10, 110 de fixation à chacune des zones inférieure 6, 106 et supérieure 8, 108 de la tôle emboutie 4, 104, sur une face intérieure de l'âme de la tôle, une plaque 12, 112, 114 de fixation de la charnière correspondante.

En outre, il est prévu qu'à l'étape (b) un orifice de détrompage sur au moins une des zones inférieure et supérieure de la tôle emboutie 4, 104 soit réalisé pour l'exécution de base et l'exécution sévérisée. Les étapes (a) et (b) sont identiques pour les deux exécutions. Cependant à l'étape (c), la ou chacune des plaques 12, 112, 114 de fixation en face de l'orifice de détrompage, respectivement, laisse passant l'orifice dans l'exécution de base du renfort 2 et obture l'orifice dans l'exécution sévérisée du renfort 102.

Il est à noter que sur chacun des renforts 2, 102 obtenu par le procédé de fabrication selon l'invention, une étape supplémentaire d'identification des renforts 2, 102 sur base d'une détermination du caractère passant ou obstrué d'un orifice 20, 120 ou des orifices 20, 120 de détrompage a pour mérite d'améliorer la gestion du flux logistique. La détermination si l'orifice est passant ou obturé peut être effectuée par un détecteur optique ou de contact, dans le cadre d'une identification automatique. Aussi, le système de détrompage permet une identification visuelle. En effet, grâce au positionnement avantageux de l'orifice de détrompage 20, 120 sur le renfort de pied central 2, 102, un opérateur peut facilement déterminer le type d'exécution, au cours d'un contrôle visuel.

En outre, au cours d'une phase d'assemblage ; chacun des renforts 2, 102 obtenu par le procédé de fabrication selon l'invention est sélectionné en fonction que la structure de la carrosserie du véhicule à assembler et ce suivant une première exécution (version avec moteur thermique) ou une deuxième exécution (version avec moteur électrique), respectivement. Avant le montage, une détermination si l'orifice est passant ou obturé est effectuée par un détecteur optique ou de contact monté sur bras de robot sur une ligne d'assemblage.

Un mode de réalisation a été décrit avec un renfort de pied central, cependant l'invention peut se décliner pour un renfort de pied avant.

L'invention a été décrite avec un orifice 20 de détrompage passant pour l'exécution de base. L'inverse aurait été envisageable, c.-à-d. un orifice de détrompage passant pour l'exécution sévérisée.

## Revendications

1. Procédé de fabrication de renfort (2, 102) de pied avant ou central de véhicule automobile, destiné à s'étendre verticalement sur le véhicule automobile et comprenant les étapes suivantes :
(a) fournir une tôle emboutie (4, 104) ayant une section transversale en U avec une âme et deux semelles;
(b) réaliser des orifices (10, 110) de fixation de charnière de portière du véhicule sur une zone inférieure (6, 106) et une zone supérieure (8, 108) de la tôle emboutie (4, 104) ;
(c) assembler, en face des orifices (10, 110) de fixation à chacune des zones inférieure (6, 106) et supérieure (8, 108) de la tôle emboutie (4, 104), sur une face intérieure de l'âme de ladite tôle (4, 104), une plaque de fixation (12, 112, 114) de la charnière correspondante;
**caractérisé en ce que**
l'étape (b) comprend, en outre, réaliser un orifice (20, 120) de détrompage sur au moins une des zones inférieure (6, 106) et supérieure (8, 108) de la tôle emboutie (4, 104) ; et
une première et une deuxième exécution du renfort sont réalisées suivant les étapes (a) à (c) où les étapes (a) et (b) sont identiques pour lesdites exécutions et, à l'étape (c), la ou chacune des plaques (12, 112, 114) de fixation en face de l'au moins un orifice de détrompage, respectivement, laisse passant ledit orifice (20, 120) dans la première exécution du renfort et obture ledit orifice (20, 120) dans la deuxième exécution dudit renfort (20, 120).

2. Procédé de fabrication selon la revendication 1, **caractérisé en ce qu'**à l'étape (c) les plaques (12, 112, 114) de fixation en face du ou de chacun des orifices (20, 120) de détrompage, respectivement, sur les première et deuxième exécutions présentent des formes différentes.

3. Procédé de fabrication selon l'une des revendications 1 et 2, **caractérisé en ce que** la ou les plaques (12) de fixation laissant passant l'au moins un orifice (20) de détrompage, respectivement, dans la première exécution du renfort, ne s'étendent que sur l'âme de la tôle emboutie (4).

4. Procédé de fabrication selon la revendication 3, **caractérisé en ce que** la ou chacune des plaques (12) de fixation laissant passant l'au moins un orifice de détrompage (20) comprend deux filetages femelles et deux orifices sur un axe perpendiculaire et médian à un segment passant par lesdits filetages, de manière à pouvoir être disposée indistinctement suivant deux positions où ladite plaque (12) est tournée de 180°.

5. Procédé de fabrication selon l'une des revendications 1 à 4, **caractérisé en ce que** la ou chacune des plaques (112, 114) de fixation obturant l'au moins un orifice (120) de détrompage, respectivement, dans la deuxième exécution du renfort, est une plaque (112, 114) de renforcement formant une équerre épousant au moins une des semelles de la tôle emboutie (104).

6. Procédé de fabrication selon l'une des revendications 1 à 5, **caractérisé en ce que** les orifices (10, 110) de fixation de la zone supérieure (8, 108) sont au nombre de deux et disposés côte à côte lorsque le renfort (2, 102) est en position verticale sur le véhicule, l'orifice de détrompage (20, 120) sur ladite zone (8, 108) étant disposé entre et en dessous les deux orifices (10, 110) de fixation.

7. Procédé de fabrication selon l'une des revendications 1 à 6, **caractérisé en ce que** les orifices (10, 110) de fixation de la zone inférieure (6, 106) sont au nombre de deux et disposés côte à côte lorsque le renfort (2, 102) est en position verticale sur le véhicule, ladite zone (6, 106) comprenant, en outre, un orifice d'indexation (30, 130) disposé entre, et en dessous ou au-dessus, des deux orifices de fixation (10, 110), l'orifice de détrompage (20, 120) de ladite zone (6, 106) étant disposé entre les deux orifices de fixation (10, 110) et au-dessus ou en dessous desdits orifices (10, 110), au droit de l'orifice d'indexation (30, 130).

8. Procédé d'identification de renforts (2, 102) de pied avant ou central de véhicule automobile ;
**caractérisé en ce que** :
chacun des renforts (2, 102) est obtenu par le procédé de fabrication selon l'une des revendications 1 à 7 ; et le procédé comprend une étape d'identification des renforts (2, 102) sur base d'une détermination du caractère passant ou obstrué du ou d'au moins un des orifices de détrompage (20, 120).

9. Procédé d'assemblage d'une structure de carrosserie de véhicule suivant un modèle donné où le pied avant et/ou le pied central présente une géométrie donnée, comprenant les étapes suivantes :
(a) sélection d'un renfort (2, 102) parmi plusieurs renforts ;
(b) mise en place du renfort (2, 102) sélectionné sur la structure de carrosserie ;
**caractérisé en ce que**
les plusieurs renforts sont obtenus par le procédé de fabrication selon l'une des revendications 1 à 7 ; et à l'étape (a) un renfort (2, 102) selon la première exécution ou la deuxième exécution est sélectionné en fonction que la structure de carrosserie du véhicule à assembler est suivant une première exécution ou une deuxième exécution, respectivement.

10. Renfort (2, 102) de pied avant ou central de véhicule automobile, de section transversale en U avec une âme et deux semelles, destiné à s'étendre verticalement sur le véhicule automobile et comprenant, à chacune d'une zone inférieure (6, 106) et d'une zone supérieure (8, 108) :
- des orifices (10, 110) de fixation de charnière de portière du véhicule ;
- une plaque (12, 112, 114) sur une face intérieure de l'âme, avec des filetages femelles en face des orifices (10, 110), destinés à recevoir des vis de fixation de la charnière correspondante ;
**caractérisé en ce que** le renfort comprend, en outre, au niveau des zones inférieure (6, 106) et supérieure (8, 108) :
- un orifice (20, 120) de détrompage laissé passant ou obturé par la plaque correspondante (12, 112, 114),
- un orifice d'indexation (30, 130) percé dans la zone inférieure (6, 106) de la tôle emboutie (4, 104),
- l'orifice d'indexation étant disposé entre et au-dessus des deux orifices de fixation (10, 110) et l'orifice de détrompage (20, 120) étant disposé entre et en-dessous des deux orifices de fixation (10, 110).

## Patentansprüche

1. Verfahren zur Herstellung einer Front- oder Mittelfußverstärkung (2, 102) eines Kraftfahrzeugs, die dazu bestimmt ist, sich vertikal auf dem Kraftfahrzeug zu erstrecken, mit den folgenden Schritten:
(a) ein gestanztes Blech (4, 104) mit U-förmigem Querschnitt mit einem Kern und zwei Sohlen vorsehen;
(b) Öffnungen (10, 110) zur Befestigung des Türscharniers des Fahrzeugs an einem unteren Bereich (6, 106) und einem oberen Bereich (8, 108) des gestanzten Blechs (4, 104) vorsehen;
(c) Zusammenbau einer Befestigungsplatte (12, 112, 114) des entsprechenden Scharniers gegenüber den Befestigungsöffnungen (10, 110) in den unteren (6, 106) und oberen (8, 108) Bereichen der gepressten Platte (4, 104) auf einer Innenseite des Kerns der Platte (4, 104);
charakterisiert durch
Schritt (b) umfasst ferner das Ausbilden einer Einrastöffnung (20, 120) auf mindestens einer der unteren (6, 106) und oberen (8, 108) Zonen des gestanzten Bogens (4, 104); und erste und zweite Ausführungsformen der Verstärkung werden gemäß den Schritten (a) bis (c) durchgeführt, wobei die Schritte (a) und (b) für die genannten Ausführungsformen identisch sind und in Schritt (c) die oder jede der Befestigungsplatten (12, 112, 114), die der mindestens einen Einrastöffnung zugewandt sind, die genannte Öffnung (20) ermöglicht , 120) in der ersten Ausführungsform der Verstärkung zu passieren und die Öffnung (20, 120) in der zweiten Ausführungsform der Verstärkung (20, 120) zu verschließen.

2. Herstellungsverfahren nach Anspruch 1, **dadurch gekennzeichnet, dass** in Schritt (c) die Platten (12, 112, 114) zur Befestigung gegenüber der oder jeder der Schlüsselöffnungen (20, 120) an der ersten bzw. zweiten Ausführungsform unterschiedliche Formen aufweisen.

3. Herstellungsverfahren nach einem der Ansprüche 1 und 2, **dadurch gekennzeichnet, dass** die die wenigstens eine Polarisationsöffnung (20) durchlassende(n) Befestigungsplatte(n) (12) in der ersten Ausführungsform der Verstärkung nur über den Kern der Stanzfolie (4) verlaufen.

4. Herstellungsverfahren nach Anspruch 3, **dadurch gekennzeichnet, dass** die oder jede der Befestigungsplatten (12), die den Durchtritt der mindestens einen Einstecköffnung (20) ermöglichen, zwei Innengewinde und zwei Öffnungen auf einer Achse umfasst, die senkrecht und mittig zu einem Segment verläuft, das durch die Gewinde verläuft, sodass sie in zwei Positionen, in denen die Platte (12) um 180° gedreht wird, undeutlich angeordnet werden können.

5. Herstellungsverfahren nach einem der Ansprüche 1 bis 4, **dadurch gekennzeichnet, dass** die bzw. jede der die mindestens eine Einstecköffnung (120) verschließenden Befestigungsplatten (112, 114) in der zweiten Ausführungsform der Verstärkung eine Verstärkungsplatte (112, 114) ist, die einen zu mindestens einem der Flansche des Stanzblechs (104) passenden Bügel bildet.

6. Herstellungsverfahren nach einem der Ansprüche 1 bis 5, **dadurch gekennzeichnet, dass** die Öffnungen (10, 110) zur Befestigung des oberen Bereichs (8, 108) zwei sind und nebeneinander angeordnet sind, wenn sich die Verstärkung (2, 102) in einer vertikalen Position am Fahrzeug befindet, wobei die Schlüsselöffnung (20, 120) auf dem Bereich (8, 108) zwischen und unter den beiden Befestigungsöffnungen (10, 110) angeordnet ist.

7. Herstellungsverfahren nach einem der Ansprüche 1 bis 6, **dadurch gekennzeichnet, dass** die Öffnungen (10, 110) zur Befestigung des unteren Bereichs (6, 106) zwei sind und nebeneinander angeordnet sind, wenn die Verstärkung (2, 102) in einer vertikalen Position am Fahrzeug ist, wobei der Bereich (6, 106) ferner eine Indexierungsöffnung (30, 130) aufweist, die zwischen und unter oder über den beiden Fixierungsöffnungen (10, 110) angeordnet ist, wobei die Fehlerschutzöffnung (20, 10) 20) Die Zone (6, 106) ist zwischen den beiden Befestigungsöffnungen (10, 110) und oberhalb oder unterhalb der Öffnungen (10, 110) in einer Linie mit der Indexieröffnung (30, 130) angeordnet.

8. Verfahren zur Identifizierung von vorderen oder mittleren Fußverstärkungen (2, 102) eines Kraftfahrzeugs;
**dadurch gekennzeichnet, dass**
Jede der Verstärkungen (2, 102) wird durch das Herstellungsverfahren nach einem der Ansprüche 1 bis 7 erhalten; und das Verfahren umfasst einen Schritt des Identifizierens der Verstärkungen (2, 102) auf der Grundlage einer Bestimmung des Durchlassvermögens oder der Verstopfung der oder mindestens einer der Verfälschungsöffnungen (20, 120).

9. Verfahren zur Montage einer Fahrzeugkarosseriestruktur nach einem bestimmten Modell, bei dem der Vorderfuß und/oder der Mittelfuß eine bestimmte Geometrie aufweisen, mit folgenden Schritten:
(a) Auswahl einer Verstärkung (2, 102) aus mehreren Verstärkungen;
(b) Anbringen der ausgewählten Verstärkung (2, 102) an der Aufbaustruktur;
**dadurch gekennzeichnet, dass**
die mehreren Verstärkungen werden durch das Herstellungsverfahren nach einem der Ansprüche 1 bis 7 erhalten; und in Schritt (a) wird eine Verstärkung (2, 102) gemäß der ersten Ausführung oder der zweiten Ausführung in Abhängigkeit davon ausgewählt, ob die Karosseriestruktur des zu verbindenden Fahrzeugs in einer ersten Ausführung bzw. einer zweiten Ausführung ist.

10. Verstärkung (2, 102) für den vorderen oder mittleren Fuß eines Kraftfahrzeugs, mit U-förmigem Querschnitt mit einem Steg und zwei Sohlen, die dazu bestimmt ist, sich vertikal über das Kraftfahrzeug zu erstrecken, und die jeweils aus einem unteren Bereich (6, 106) und einem oberen Bereich (8, 108) besteht:
- Öffnungen (10, 110) zur Befestigung des Türscharniers des Fahrzeugs;
- eine Platte (12, 112, 114) an einer Innenseite des Kerns mit den Öffnungen (10, 110) gegenüberliegenden Innengewinden zur Aufnahme von Befestigungsschrauben des entsprechenden Scharniers;
**dadurch gekennzeichnet, dass** die Verstärkung außerdem im Bereich der unteren (6, 106) und oberen (8, 108) Zonen umfasst:
- eine durch die zugehörige Platte (12, 112, 114) hindurchgelassene oder verschlossene Verwechslungsöffnung (20, 120),
- eine Indexieröffnung (30, 130) im unteren Bereich (6, 106) des Tiefziehblechs (4, 104),
- wobei die Indexieröffnung zwischen und oberhalb der beiden Befestigungsöffnungen (10, 110) und die Enttäuschungsöffnung (20, 120) zwischen und unterhalb der beiden Befestigungsöffnungen (10, 110) angeordnet ist.

## Claims

1. A method of manufacturing a front or center foot reinforcement (2, 102) of a motor vehicle, intended to extend vertically on the motor vehicle, comprising the following steps:
(a) provide a stamped sheet (4, 104) having a U-shaped cross-section with a core and two soles;
(b) provide openings (10, 110) for fixing the door hinge of the vehicle to a lower area (6, 106) and an upper area (8, 108) of the stamped sheet metal (4, 104);
(c) assembling, facing the fixing orifices (10, 110) in each of the lower (6, 106) and upper (8, 108) zones of the pressed sheet (4, 104), on an inner face of the core of said sheet (4, 104), a fixing plate (12, 112, 114) of the corresponding hinge;
**characterized by**
step (b) further comprises forming a keying orifice (20, 120) on at least one of the lower (6, 106) and upper (8, 108) zones of the stamped sheet (4, 104); and first and second embodiments of the reinforcement are carried out according to steps (a) to (c) where steps (a) and (b) are identical for said embodiments and, in step (c), the or each of the fixing plates (12, 112, 114) facing the at least one keying orifice, respectively, allows said orifice (20, 120) to pass in the first embodiment of the reinforcement and closes said orifice (20, 120) in the second embodiment of said reinforcement (20, 120).

2. Manufacturing method according to Claim 1, **characterized in that**, in step (c), the plates (12, 112, 114) for fastening opposite the or each of the keying orifices (20, 120), respectively, on the first and second embodiments have different shapes.

3. Manufacturing process according to one of Claims 1 and 2, **characterized in that** the fixing plate or plates (12) allowing the at least one polarizing orifice (20) to pass through, respectively, in the first embodiment of the reinforcement, extend only over the core of the stamped sheet (4).

4. Manufacturing method according to claim 3, **characterized in that** the or each of the fixing plates (12) allowing the at least one keying orifice (20) to pass through comprises two female threads and two orifices on an axis perpendicular and median to a segment passing through said threads, so as to be able to be arranged indistinctly in two positions where said plate (12) is turned by 180°.

5. Manufacturing process according to one of Claims 1 to 4, **characterized in that** the or each of the fixing plates (112, 114) closing off the at least one keying orifice (120), respectively, in the second embodiment of the reinforcement, is a reinforcing plate (112, 114) forming a bracket matching at least one of the flanges of the stamped sheet (104).

6. Manufacturing process according to one of Claims 1 to 5, **characterized in that** the orifices (10, 110) for fixing the upper zone (8, 108) are two in number and arranged side by side when the reinforcement (2, 102) is in a vertical position on the vehicle, the keying orifice (20, 120) on the said zone (8, 108) being arranged between and below the two fixing orifices (10, 110).

7. Manufacturing method according to one of Claims 1 to 6, **characterized in that** the orifices (10, 110) for fixing the lower zone (6, 106) are two in number and arranged side by side when the reinforcement (2, 102) is in a vertical position on the vehicle, the said zone (6, 106) further comprising an indexing orifice (30, 130) arranged between, and below or above, the two fixing orifices (10, 110), the error-proofing orifice (20, 10) 20) of said zone (6, 106) being arranged between the two fixing orifices (10, 110) and above or below said orifices (10, 110), in line with the indexing orifice (30, 130).

8. Method for identifying motor vehicle front or center foot reinforcements (2, 102);
**characterized in that**:
each of the reinforcements (2, 102) is obtained by the manufacturing method according to one of claims 1 to 7; and the method comprises a step of identifying the reinforcements (2, 102) on the basis of a determination of the passing or obstructing character of the or at least one of the keying orifices (20, 120).

9. Method of assembling a vehicle body structure according to a given model where the front foot and/or the central foot has a given geometry, comprising the following steps:
(a) selection of a reinforcement (2, 102) from among several reinforcements;
(b) placing the selected reinforcement (2, 102) on the body structure;
**characterized by**
the plurality of reinforcements are obtained by the manufacturing method according to one of claims 1 to 7; and in step (a) a reinforcement (2, 102) according to the first execution or the second execution is selected according to whether the body structure of the vehicle to be assembled is according to a first execution or a second execution, respectively.

10. Reinforcement (2, 102) of the front or central foot of a motor vehicle, of U-shaped cross-section with a core and two soles, intended to extend vertically on the motor vehicle and comprising, at each of a lower zone (6, 106) and an upper zone (8, 108):
- the holes (10, 110) for fixing the door hinge of the vehicle;
- a plate (12, 112, 114) on an inner face of the core, with female threads facing the orifices (10, 110), intended to receive screws for fixing the corresponding hinge; **characterized in that** the reinforcement also comprises, at the level of the lower (6, 106) and upper (8, 108) zones:
an error-proofing orifice (20, 120) left open or closed by the corresponding plate (12, 112, 114),
- an indexing orifice (30, 130) pierced in the lower zone (6, 106) of the stamped sheet (4, 104),
- the indexing orifice being arranged between and above the two fixing orifices (10, 110) and the polarizing orifice (20, 120) being arranged between and below the two fixing orifices (10, 110).
